# EUROPEAN PATENT APPLICATION

(11) **EP 4 266 156 A1**
(43) Date of publication of application: **25.10.2023**
(21) Application number: 22168944.1
(22) Date of filing: 20.04.2022
(51) Int. Cl.: G06F 3/01, G09B 17/00, B43K 29/00, G06F 3/0354

(54) **APPARATUS AND METHOD FOR HAPTICALLY AUGMENTED DISPLAY OF VISUAL CUES**

(71) Applicant: BIC Violex Single Member S.A., 145 69 Anoixi (GR)
(72) Inventor: Antonakis, Ion - Ioannis, 14569 Anoixi (GR)
(74) Representative: Peterreins Schley

(57) **Abstract**

An aid to reading comprises a computer implemented method (10) for haptically augmented display of visual cues comprising:
- obtaining (12) input data comprising at least one visual cue (26) to be displayed on a display (24);
- obtaining (14) haptic map data (28) corresponding to the at least one visual cue (26);
- displaying (16) the at least one visual cue (26) on at least one spatial region of the display (24);
- receiving (18), from an eye tracker (70) a location (29) of a gaze region (25) of the user on the display (24);
- generating (20) at least one haptic cue signal (28c) from a set of haptic cue definitions (28b) comprised in the haptic map data based on a comparison of the location (29) of the gaze region (25) on the display (24) with the a display location of the at least one visual cue (26); and
- outputting (22) the at least one haptic cue signal (28c) to at least one haptic output device (50).

## Description

### Technical Field

The embodiments described herein relate to a computer implemented method for haptically augmented display of visual cues, and an associated apparatus, system, computer program element, and computer readable medium.

### Background

In an educational context, reading or transcribing text suffers from loss of concentration and focus on the part of participants. Noisy environments can reduce attention, and hinder the transfer of information between student and textbook, for example.

A typical solution to addressing loss of concentration and focus within an educational context is by reducing the ambient noise, reducing the number of students in a class, or applying structured concentration techniques such as the Pomodoro technique. However, it might not always be possible to reduce noise, class sizes are often fixed, and structured concentration techniques require a student to be taught the structured concentration technique, which is inefficient if the class size is large.

Accordingly, techniques for reading or transcribing text can be further improved.

### Summary

According to a first aspect, a computer implemented method for haptically augmented display of visual cues is provided, comprising:
- obtaining input data comprising at least one visual cue to be displayed on a display;
- obtaining haptic map data corresponding to the at least one visual cue, wherein the haptic map data comprises a map characterising a display location of the at least one visual cue, a set of haptic cue definitions, and a mapping between the set of haptic cue definitions and the at least one visual cue or map, wherein each haptic cue definition enables the generation of a corresponding haptic cue signal related to at least one spatial region of the display when at least one of the visual cues is visible to a user on the display;
- displaying the at least one visual cue comprised in the input data on at least one spatial region of the display;
- receiving, from an eye tracker a location of a gaze region of the user on the display;
- generating at least one haptic cue signal from the set of haptic cue definitions based on a comparison of the location of the gaze region on the display with the haptic map data; and
- outputting the at least one haptic cue signal to at least one haptic output device.

According to a second aspect, an apparatus for haptically augmented display of visual cues is provided. The apparatus comprises a processor, a memory, and a communication interface.

The processor is configured to obtain input data comprising at least one visual cue to be displayed on a display.

The processor is configured to obtain haptic map data corresponding to the at least one visual cue comprised in the input data. The haptic map data comprises a map characterising a display location of the at least one visual cue, a set of haptic cue definitions, and a mapping between the set of haptic cue definitions and the at least one visual cue. Each haptic cue definition enables the generation of a corresponding haptic cue signal related to at least one spatial region of the display when at least one of the visual cues is visible on the display.

The processor is configured to communicate the at least one visual cue comprised in the input data, via the communication interface, for display on the at least one spatial region of the display.

The processor is configured to receive, via the communication interface, a location of a gaze region of the user on the display from an eye tracker configured to perform eye tracking of a user of the display.

The processor is configured to generate at least one haptic cue signal from the set of haptic cue definitions based on a comparison of the location of the gaze region on the display with the haptic map data.

The processor is configured to output the at least one haptic cue signal to at least one haptic output device via the communication interface.

According to a third aspect, a system for assisted reading is provided. The system comprises:
- an apparatus according to the second aspect, a display, an eye tracker communicably coupled to the apparatus, and a haptic output device communicably coupled to the apparatus.

The eye tracker is configured to perform eye tracking of a user of the display to characterise a location of a gaze region of the user on the display, and to provide the location to the apparatus. The haptic output device is configured to receive, from the apparatus, at least one haptic cue signal, and to induce a haptic sensation corresponding to the location of the gaze region using the haptic output device.

According to a fourth aspect, a haptic output device comprising a controller, a wireless communications interface, and a haptic feedback generator is provided.

The controller is configured to obtain, via the wireless communications interface, location data defining a location of a gaze region of the user on a display from an eye tracker.

The controller is configured to obtain haptic map data wherein the haptic map data comprises a map characterising a display location of the at least one visual cue, a set of haptic cue definitions, and a mapping between the set of haptic cue definitions and the at least one visual cue or map, wherein each haptic cue definition enables the generation of a corresponding haptic cue signal related to at least one spatial region of the display when at least one of the visual cues is visible on the display.

The controller is configured to generate at least one haptic cue signal from the set of haptic cue definitions based on a comparison of the location data with the haptic map data.

The controller is configured to actuate the haptic feedback generator using the at least one haptic cue signal such that, in use, a haptic cue is perceived by a user of the haptic output device.

According to a fifth aspect, a computer program element is provided, comprising machine readable instructions which, when executed by a processor, causes the processor to perform the computer implemented method according to the first aspect, or its embodiments.

According to a sixth aspect, a computer readable medium is provided, comprising the computer program element according to the fifth aspect.

An effect of the technique of the present specification is to provide multisensory stimulus that can assist with memorisation of words and sentences that have been recently read from a display by a user. Memorisation of information can be a difficult process for individuals irrespective of their age group. Some examples of individuals who could benefit from the technique of the present specification are school or university students when studying for exams, or individuals suffering from age -related cognitive decline, or individuals whose work activities involve a high degree of factual memorisation, such as medical Doctors, or in other work environments.

Multisensory stimulation concerns the combination of different sensory stimuli to enhance the overall effectiveness of a task. In the case of this specification, it is proposed to simultaneously combine visual cues and haptic cues. The haptic cues are sequenced based on eye tracking performed on a user as they read visual cues. The haptic cues are delivered to the user by a haptic output device.

Research has shown that speaking text at the same time as reading text enables an improvement in memorisation, via a process called the production effect. Some studies have shown an improvement in recall of almost 10% when a student has read a set of words aloud, as opposed to silently. However, in large classrooms or open office spaces, it might not be practical to enable all students or participants to read out loud. Furthermore, if many students are vocalising many different texts at the same time, the multisensory enhancement effect is reduced owing to the difficulty of focusing on one text.

Accordingly, the present specification addresses the problem of providing a multisensory stimulus to a student based on input data comprising text in a digital education environment.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as nonlimiting examples. Common reference numerals on different figures indicate like or similar features.
- **Figure 1**: schematically illustrates an example of a computer implemented method for haptically augmented display of visual cues according to the first aspect.
- **Figure 2**: schematically illustrates an example of a plurality of visual cues as related to a display of exemplary input data.
- **Figure 3**: schematically illustrates an example of a system according to the third aspect, in use.
- **Figure 4**: schematically illustrates an example of a display.
- **Figure 5**: schematically illustrates an example of obtaining a haptic cue signal from visual cues.
- **Figure 6**: schematically illustrates an example of an apparatus according to the second aspect.
- **Figure 7**: schematically illustrates an example of the system according to the third aspect.
- **Figure 8**: schematically illustrates an overview of an algorithm for haptically augmented display of visual cues.
- **Figure 9**: schematically illustrates an example of a haptic output device according to the fourth aspect.

### DETAILED DESCRIPTION

This specification concerns the provision of multisensory stimulation using visual and haptic cues. It assists with improving the memorisation speed and accuracy of users by utilising visual-haptic multisensory enhancement. This eliminates the need for reading material aloud, whilst maintaining the benefits of vocal enunciation of material for memorisation. The noise apparent to a user is reduced, by merging information from the auditory and tactile sensory systems of the body, hence improving a signal-to-noise ratio when performing a memorisation task.

Haptic or tactile feedback is, for example, a physical response on a digital device from user input, also known as kinaesthetic communication. Kinaesthetic communication is generated using mechanical or electronic means of force, vibrations, or motions to the user in response to a user's action on the digital device.

In an example, it is proposed to obtain haptic cues based on the properties of synthesised human speech from visual cues in input data to be displayed on a display.

A general explanation of the technique is now provided. A user loads input data to an apparatus (digital device 60) that is communicably coupled to, or which comprises, an eye tracker 70. The field of view of the eye tracker is capable of monitoring a gaze region 25 of a user when interacting with a display used to display the input data loaded by the user.

The input data comprises a plurality of visual cues 26. The visual cues 26 can comprise digital text, or symbols. The user intends to read, and to memorise, the visual cues 26. According to this specification, haptic map data 28 referenced to the plurality of visual cues 26 in the input data can be obtained in a number of ways. In an example, the haptic map data 28 can be generated upon loading of the input data, as an initialisation step, before the user begins to read the visual cues on a display 24. In an example, the input data itself comprises precomputed haptic map data 28 corresponding to visual cues 26 in the input data.

In an example, the haptic map data 28 is partially computed (or computed "on demand") based on the location of the gaze of a user (in other words, the synthesis of the haptic feedback is generated in real-time, based on a current, or predicted, gaze of the user).

In an example, the haptic map data 28 is partially computed (or computed "on demand") based on a current viewport (or window configuration) of the input data in the display 24. In the foregoing examples, haptic map data 28 is not computed for visual cues 26 that are comprised within the input data, but are not currently displayed to a user on the display 26. In another example, the haptic map data 28 is partially computed in respect of text appearing a predetermined number of lines underneath the current boundary of the viewing window of a text reading application.

Therefore, an approach for generating the haptic map data 28 will be discussed subsequently, following discussion of the structure of the haptic map data 28 and the use of the haptic map data 28 for providing haptic feedback to a user.

Whether or not the haptic map data 28 is entirely precomputed prior to the initialisation of the eye-tracking process, or partially or fully computed during use, the process of obtaining the haptic map data 28 is transparent to the user and requires no user input once the input data has been designated by a user.

The user obtains and initialises a haptic output device 50 and communicably couples it to the digital device 60. In an example, this is a haptic feedback device in the form of a digital writing instrument. The haptic output device 50 houses a haptic device controller 53 for controlling the haptic output device 50, a haptic feedback generator 54, and a wireless modem for receiving wireless data from a digital device 60 that is communicably coupled to an eye tracker 70.

In general, the digital device 60 displays, on the display 24, an image of a digital document, webpage, e-book, and the like that comprises at least one visual cue 26, for example, text. The eye tracker 70 monitors the location 29 of a gaze region 25 of the user relative to at least one visual cue 26. If the eye tracker 70 determines that the gaze region 25 of the user intersects a boundary of at least one visual cue 26 displayed on the display 24, the digital device 60 detects this condition and obtains from the haptic map data 28, a haptic cue definition relating to the at least one visual cue 26 that has been intersected by the gaze region of the user.

The digital device 60 converts the haptic cue definition to a haptic cue signal 28c. The haptic cue signal 28c is communicated to the haptic output device 50. The haptic output device 50 induces in the user a specific tactile sensation related to the visual cue 26 that the user's gaze is focused on, at substantially the same time that the user's gaze is focused on the visual cue 26 associated with the tactile sensation.

Such multisensory feedback when reading a visual cue 26 provides a user with a tactile signal having a frequency content specifically related to the same visual cue 26 that the user is focusing on visually. This correlation between tactile and visual sensation leads to improvement in retention in the user's memory, and improved recall of the information comprised in the at least one visual cue 26. The article "Immediate Improvement of speech-in-noise perception through multisensory stimulation via an auditory to tactile sensory substitution" by Cieśla, K et al, J. Restorative Neurology and Neuroscience, Vol. 37, no.2, pp.155-166, 2019, DOI: 10.3233/RNN-190898 demonstrates that tactile feedback improves the intelligibility of speech in noise via a multisensory mechanism.

Therefore, an approach is proposed according to aspects of this specification that enables users reading location on a display to be determined to an exact visual cue, to map or correlate the reading location to a specific vibration or vibration sequence related to the visual cues that the user is looking at, and to communicate the tactile feedback to a user. This enables the user to benefit from the memory-enhancing effect of enunciating text, albeit silently, owing to the multisensory enhancement provided by the haptic feedback.

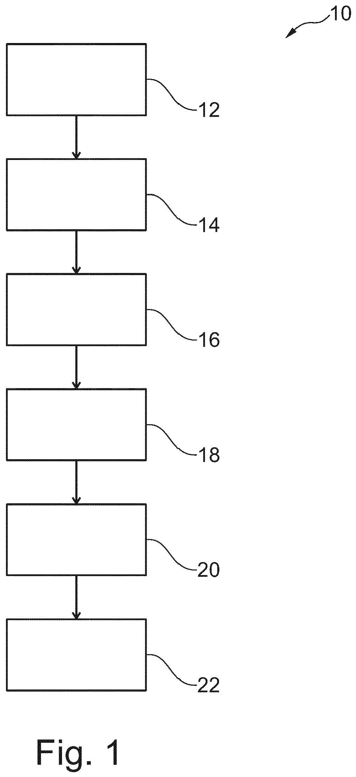

**Figure 1** schematically illustrates an example of a computer implemented method for haptically augmented display of visual cues according to the first aspect.

According to the first aspect, the computer implemented method 10 for haptically augmented display of visual cues comprises:
- obtaining 12 input data comprising at least one visual cue 26 to be displayed on a display 24;
- obtaining 14 haptic map data 28 corresponding to the at least one visual cue 26, wherein the haptic map data 28 comprises a map 28a characterising a display location of the at least one visual cue, a set of haptic cue definitions 28b, and a mapping 30 between the set of haptic cue definitions 28b and the at least one visual cue 26 or map 28a, wherein each haptic cue definition 28b enables the generation of a corresponding haptic cue signal 28c related to at least one spatial region of the display 24 when at least one of the visual cues 26 is visible to a user on the display 24;
- displaying 16 the at least one visual cue 26 comprised in the input data on at least one spatial region of the display 24;
- receiving 18, from an eye tracker 70 a location 29 of a gaze region 25 of the user on the display 24;
- generating 20 at least one haptic cue signal 28c from the set of haptic cue definitions 28b based on a comparison of the location 29 of the gaze region 25 on the display 24 with the haptic map data 28; and
- outputting 22 the at least one haptic cue signal 28c to at least one haptic output device 50.

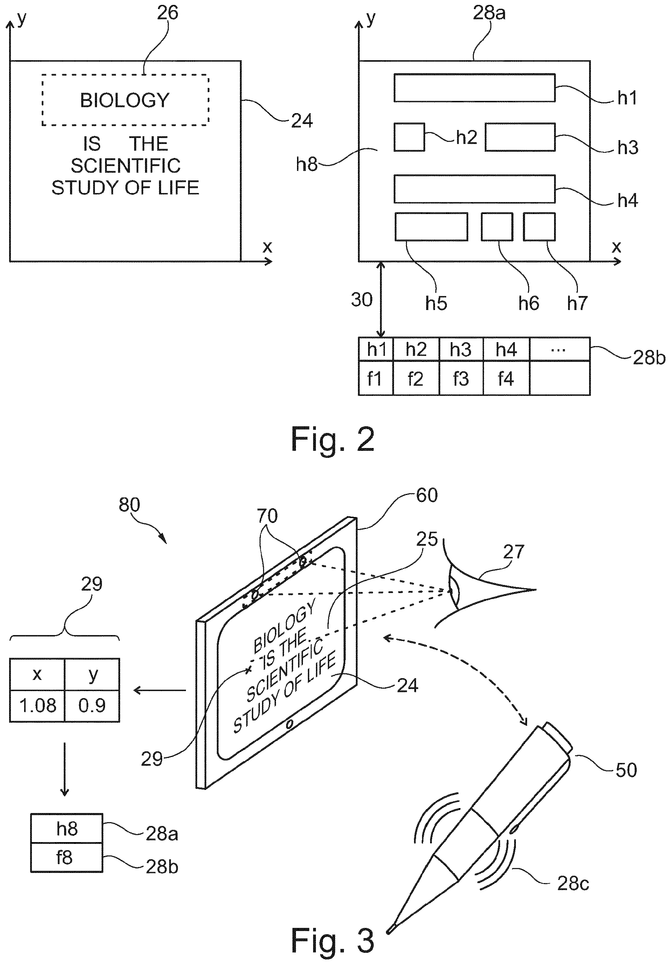

**Figure 2** schematically illustrates an example of a plurality of visual cues as related to a display of exemplary input data.

In an embodiment, the at least one haptic cue signal 28c is generated based on a corresponding at least one visual cue 26. In an embodiment, the at least one haptic cue signal 28c is generated based on an audio signal synthesized from text content of the corresponding at least one visual cue 26.

In an embodiment, the at least one visual cue 26 is text. In an example, the at least one visual cue 26 is a text element obtained from input data comprising text. The text can be encoded in a variety of formats. In an example, the input data is a Portable Document Format (.PDF) file. The visual cues 26 are comprised as text in the body of the .PDF file. A PDF parser is, for example, configured to identify a PDF "Page" object, corresponding to a page to be displayed on a display 24. In an example, the input data is an HTML page of a website accessed by an Internet browser.

The display 24 displays a plurality of visual cues resulting from the display of the input data. For example, the display 24 represents a displayed view of a page of a .PDF document, an HTML page, a Microsoft PowerPoint (TM) Presentation, or an e-book.

In **Figure 2****,** one word "Biology" can be considered to be one visual cue 26. In another case, a phoneme or syllable comprised within an entire word is a visual cue. However a clause, or a fragment of a sentence, a full sentence, and/or paragraph can constitute an entire visual cue. Therefore, in an example, the display 24 of **Figure 2** comprises seven words, and seven visual cues h1-h7 related to the words.

The background upon which the words are displayed may, in an example, be considered to be another visual cue h8. For example, a null haptic cue definition defining zero haptic feedback may be assigned to the region h8. In another example, a haptic cue definition defining allow-level vibration indicating that the user is not looking at region of the display 24 comprising text may be assigned to the region h8.

Although not illustrated in **Figure 2****,** an eye tracker 70 can identify (localise) which visual cue a user is looking at on the display 24. In the illustrated example, a marker such as a dotted outline is displayed around the visual cue "Biology" in response to the eye tracker 70 detecting that a user is fixating on the word "Biology".

In the example of **Figure 2****,** haptic map data 28 is divided into a plurality of haptic fields h1-h8 which are registered to the 2D coordinate system of the display 24.

The location of the haptic fields h1-h8 relative to each other, and the registration to the 2D coordinate system of the display 24, is an example of a map 28a comprised in the haptic map data 28.

In a case where the input data is displayed as a sub-window of the display 24, the plurality of haptic fields h1-h8 are registered to the 2D coordinate system of the sub- window. An additional 2D coordinate transformation is provided such that the 2D coordinate system of the sub- window is registered to the 2D coordinate system of the display 24. Such registration enables the location of each haptic field to be compared to the location visual cues 26 in the input data. Accordingly, the location of the haptic fields h1-h8 in the haptic map data 28, when registered to the coordinates of the display 24, define a mapping between the haptic fields h1-h8 and corresponding visual cues 26 in the input data, or in the or map 28a.

The haptic map data 28 additionally comprises a set of haptic cue definitions 28b. In an example, a data structure is provided. In an example, a first record of the data structure comprises a field with a mapping to the first haptic field h1, and another field comprising a definition of a haptic cue f1 (tactile sensation) that should be induced in a user using a haptic output device 50 when a location 29 of a gaze region 25 indicates that the eye 27 of a user is fixated, or looking at, the portion of the display 24 comprising the visual cue 26.

Therefore, when the location of a gaze region 29, as detected by an eye tracker 70, intersects with the haptic field h1, for example, software receiving a location of the gaze region 29 from the eye tracker 70 can detect that the gaze region 29 intersects with the haptic field h1, and in turn output haptic cue f1.

In an example, the haptic cue definition f1 associated with haptic field h1 is derived from content of the visual cue 26. As will be defined subsequently, an example of the association of haptic field h1 with the visual cue 26 is that a speech synthesiser 64a obtains text displayed as a visual cue 26 in the region of the display 24 associated with the haptic field h1. The speech synthesiser 26 generates the speech audio equivalent of the text displayed as a visual cue 26. Following a variety of filtering or signal processing operations, the haptic cue definition f1 is derived from the speech synthesis process.

In an example, the haptic map data 28 comprises a vibrational data array comprising haptic cue signals 28c. The vibrational data array is dependent on the number of words (or phonemes, or syllables) found in the target document represented by the input data. For example, if a user opens input data consisting of a document having one hundred words, the array can comprise 100 records. In an example, each record is then split into further sub- cells in order to accommodate the required data such as audio signals, fundamental frequencies of the audio signals, and the like.

The speech synthesizer may additionally define the haptic cue definition based on other synthesised characteristics of human speech as well as the fundamental frequency. For example, the envelope of a word, fundamental frequency drift according to time, magnitude according to time, and the like may be encoded as the haptic signal definition in addition, because these are other examples of the characteristic of a synthesized word. In an example, a user may select one or more example voices for the speech synthesizer to apply to the visual cues. For example, a user may prefer a haptic signal based on speech synthesized using a high pitched voice, or a low pitched voice.

Dependent on an operating system 63 used by the digital device 60, the array could be a data structure compiled from C++, C, or interpreted as Python, Java, or SQL.

In an example, a haptic signal synthesiser 64b is configured to analyse the frequency components of each word in an audio format, for example via fast Fourier transform, found in each sub- cell of the vibrational data array stated above. For example, the haptic signal synthesiser 64b is configured to determine the amplitude and frequency of the fundamental of a synthesised speech element generated by the speech synthesiser 64a. The synthesised speech is, for example, filtered so that only signals below 500 Hz are stored in a sub- cell of the vibrational data array. This is a form of data compression because there is no utility in storing vibrational data above the frequency of perception of a human user, for example.

In another example, the haptic cue definition 28b is a parametric definition, such as "sine wave with frequency 200 Hz", illustrated as f1 in **Figure 2****.** The foregoing enables the haptic map data 28 to be significantly compressed relative to the sampled speech audio equivalent. In an example, the haptic cue definition 28b is the sampled speech audio equivalent, with signal processing applied, and this enables more complicated haptic output signals to be stored as the haptic cue definition 28b.

Displaying 16 the visual cue 26 comprises loading the input data using a digital device 60, parsing the input data using the digital device 60 according to the format of the input data into an image display signal, and displaying the image display signal on a display 24. A skilled person will appreciate that a wide variety of display types can be used to display the input data, such as a personal computer monitor, a laptop monitor, an e-book screen, a smart tablet monitor, a smart phone screen, a television screen, a smart whiteboard screen, a projector screen, and the like. As one example, displaying 16 the visual cue 26 comprises obtaining a Microsoft PowerPoint (TM) presentation (.ppt), setting the presentation into full screen display mode, and displaying text elements of the presentation as visual cues 26.

Receiving 18 a location of a gaze region 29 of a user on the display 24 comprises using a digital device 60 to interrogate an eye tracker 70.

Eye trackers 70 perform the process of measuring either the point of gaze or the motion of an eye relative to a user's head, for example. An eye tracker is a device for measuring a position of at least one eye, and eye movement, with a variety of hardware. Eye tracking is usually performed by optical techniques, such as using infrared cameras, however eye tracking can also be performed by electrophysiological techniques, for example using electrodes that contact the skin of the face of the user in close proximity to the eyes.

An eye tracker 70 can be integrated into a digital device 60. For example, some laptops comprise eye tracking hardware in the strip adjacent to the top edge of the laptop screen. **Figure 3** illustrates an example of an eye tracker 70 integrated in such a manner into a smart tablet. An eye tracker 70 can be a separate camera unit that is communicably coupled to the digital device 60.

When an eye tracker 70 is integrated into a digital device 60, the geometrical relationship between the plane of orientation of the eye tracker 70 and the plane of orientation of a display 24 is usually known beforehand.

When an eye tracker 70 is comprised in a separate camera unit, the plane of orientation of the separate camera unit and the plane of orientation of the display 24 is registered, so that the location 29 of a gaze region 25 on the related display 24 can be accurately localised by the eye tracker 70 in the separate camera unit. In an embodiment, the method further comprises registering an orientation of the display 24 to an orientation of the eye tracker 70.

In an example, an eye tracker 70 is configured to illuminate a region of a user's face with light in a predetermined light wavelength range. Light within the predetermined light wavelength range reflects from the user's face, and is detected by a detector that is sensitive to the predetermined light wavelength range. The detected light is subject to an image processing operation enabling the position and/or gaze direction and/or gaze point of at least one eye of the user to be localised relative to the display 24.

In an example, the eye tracker 70 is based on a pupil centre corneal reflection (PC-CR) algorithm, either working in "Bright Pupil" (BP) or "Dark Pupil" (DP) mode. In an example, the eye tracker 70 is configured to generate a differential BP-DP image. A wide variety of eye tracking hardware and eye tracking software algorithms are appropriate, provided the location 29 of the gaze region 25 can be localised within the boundaries of the display 24, such that the fixation of the gaze on one or more visual cues 26 can be resolved accurately enough to trigger the haptic fields h1-h8, discussed above, for example.

In an example, the eye tracker 70 extracts or monitors several parameters individually or simultaneously when attempting to localise the gaze. For example, eye movements can be considered to be either fixational or saccadic. Fixational operation of the eye stabilises the retina for information extraction. Saccadic movement of the eye rapidly moves the gaze to acquire new features from within the visual field.

Fixations are be defined by duration of the gaze at a specific location, and drift from a location, or drift whilst fixating.

Saccades are be defined by the duration, amplitude, average speed, speed profile, and/or frequency of the movement of the location of the gaze region within the visual field.

In an example, the location 29 of the gaze region 25 within the display 24 is determined by detecting the location of fixation of the user relative to at least one visual cue 26 displayed by the display 24. In an example, the location 29 of the gaze region 25 within display 24 is determined by monitoring a pattern of saccades, or micro-saccades relative to at least one visual cue 26 displayed by the display 24.

In an example, the eye tracker 70 is configured to perform eye tracking of a user of the display 24.

Generating 20 at least one haptic cue signal 28c from the set of haptic cue definitions 28b of the haptic map data 28 comprises monitoring the location 29 of the gaze region 25 of a user as derived from an output signal of the eye tracker 70. For example, a location 29 of the gaze region 25 of a user is defined as an X-Y coordinate. The X-Y coordinate are be registered relative to an origin point of the display 24, for example, the bottom left hand corner of the display 24, or the geometric centre of the display 24. In an example, the X-Y coordinate are registered relative to an origin point of a virtual window displayed by software hosted by the digital device 60, wherein the virtual window comprises a plurality of visual cues 26.

In the case where the location 29 is defined as one X-Y coordinate, the process of comparing the location 29 of the gaze region 25 on the display 24 with the haptic map data 28can be provided as a binary logic test. When the X-Y coordinate defining the location 29 is included within (is coincident with) a haptic field such as h1 of **Figure 2****,** and associated haptic cue definition f1 is referenced via the mapping 30 in the set of haptic cue definitions 28b. As soon as the X-Y coordinate defining the location 29 moves out of the haptic field such as h1, into the general haptic field h8, another associated haptic cue definition f8 (not shown) is referenced. In an example, h8 is an example of a haptic cue definition that is not associated with a visual cue 26. In an example, the haptic cue definition when the location 29 is coincident with haptic field h8 is a null signal, indicating that the gaze is not focused on a visual cue 26.

Of course, many alternatives for characterising the location 29 of the gaze region 25 can be envisaged apart from an X-Y coordinate point. For example, rather than a fixed point, a statistical measure such as a cloud of probability defined as a circle, within which the location 29 of the gaze vision 25 varies according to a pseudorandom process with a fixed variance and standard deviation can be provided. In this case, the determination of whether, or not, the location 29 is within the haptic field h1 is based on, for example, a time-based integration of the portion of the cloud of probability intersecting with the haptic field h1.

For example, rather than a fixed point, a time-windowed 2D function comprising trajectories of micro-saccades detected by the eye tracker 70 may define the location 29 of the gaze region 25. If, within a given time window, a predetermined proportion (measured by distance) of the micro-saccades are within the haptic field h1, the software hosted by the digital device 60 determines that the location 29 is within the haptic field h1. Such statistical or saccade-based approaches can enhance robustness, at the expense of greater signal processing overhead.

In an example, generating 20 the at least one haptic cue signal further comprises, once a relevant haptic cue definition f1 has been selected from the set of haptic cue definitions 28b, converting the haptic cue definition f1 into a haptic cue signal capable of driving a haptic feedback generator 54 in a haptic output device 50. Dependent on the format of the haptic cue definition f1, converting the haptic cue definition f1 into a haptic cue signal comprises synthesising a sinusoid having a predetermined frequency, or replaying a stored audio signal at a predetermined sampling rate. A wide range of options exists for generating the haptic cue signal based on the intended format of the tactile feedback to be provided by the haptic feedback generator 54.

In an example, a correlator 64c of the digital device 60 is configured to perform the comparison between the location 29 of the gaze region 25 obtained by the eye tracker 70 and a specific haptic field h1 in the displayed text document that corresponds to a visual cue. The location 29 is used to determine the appropriate visual cue in the input data, and when location 29 has been matched with a specific haptic field h1, the haptic map data 28, and/or haptic cue signal 28c is obtained comprising the fundamental frequency and amplitude. The obtained haptic map data 28 and/or haptic cue signal 28c is output to the haptic output device 50.

In an embodiment, generating 20 the at least one haptic cue signal 28c further comprises:
- relating the location 29 of the gaze region 25 of the user on the display 24 to the at least one visual cue 26 comprised in the haptic map data 28 when the at least one visual cue 26 is displayed on at least one spatial region of the display 26;
- identifying an intersection between the location 29 of the gaze region 25 and the at least one visual cue 26 comprised in the haptic map data 28 defined in the haptic map data; and
- obtaining the haptic cue definition f1 from the set of haptic cue definitions 28b based on the mapping to the set of haptic cue definitions from the at least one spatial region of the display 24.

Outputting 22 haptic cue signal 28c comprises, for example, transmitting the haptic cue signal 28c from haptic signal synthesiser software 64b executed by processor 62a of digital device 60 from a wireless modem comprised in the digital device 60. In an embodiment the haptic output device 50 is comprised in a writing instrument, a tablet computer, a smartphone, or a smartwatch.

**Figure 3** schematically illustrates an example of a system according to the fourth aspect, in use. An eye 27 of a user focuses on a gaze region 25 within the visual field of the user that falls on a point of display 24 comprising no visual cue 26. In other words, the haptic field h8 illustrated haptic map data 28 shown in **Figure 2** is intersected by the gaze region 25. The location 29 of the gaze region 25 is accordingly detected by eye tracker 70 and output to an operating system 63 executed by an apparatus 62 of the digital device 60. A skilled reader will appreciate that a wide range of third-party eye trackers 70 can integrate with operating systems 63 such as Microsoft Windows (TM), Apple Safari (TM), and the like such that the location 29 of the gaze region can be easily extracted by application-specific software 64. Based on the location 29 of the gaze region 25, the haptic cue signal 28c is transmitted to the haptic output device 50, the user of the haptic output device 50 feels a tactile sensation relative to the current location of the gaze region 25.

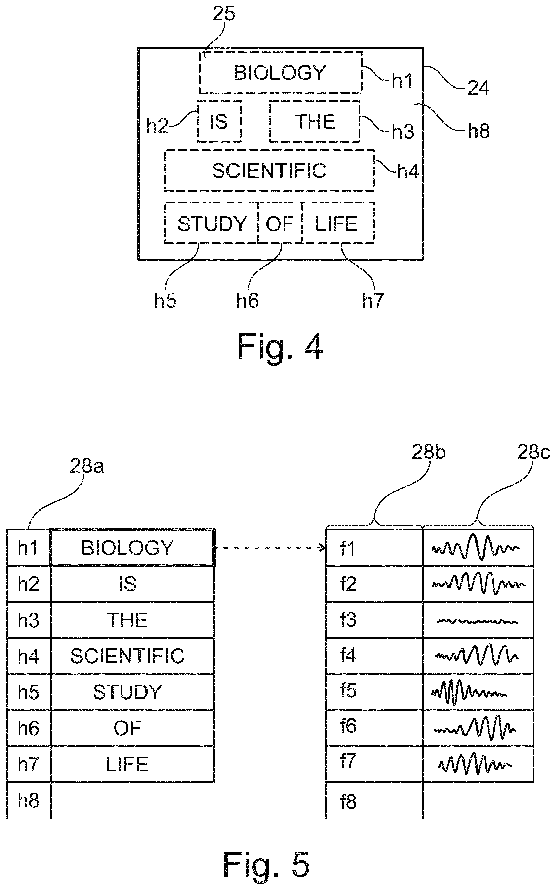

**Figure 4** schematically illustrates an example of a display with the haptic fields h1-h8 defined by the haptic map data 28 superimposed and registered to the visual cues 26. A marker illustrates the current location of a gaze region 25 that is activating the haptic field h1. In this case, the haptic cue signal f1 is output.

The specification now turns to the method of generating haptic cue definitions 28b for use with the haptic map data 28. The process discussed subsequently can be executed as a precursor of the method according to the first aspect. In this case, the user loads input data, and haptic cue definitions 28b are generated according to the steps to be discussed below before user reading of the display 24 commences.

In another aspect, the method discussed subsequently can be operated independently of the method according to the first aspect. For example, the input data can separately be converted into haptic map data 28 comprising haptic cue definitions 28b, with the haptic map data 28 appended to the input data. Thus, the step of obtaining 14 haptic map data 28 is in this case reduced to loading input data with precomputed haptic map data 28 appended. In a specific example, the meta data of a .PDF file can be provided with a table of data providing the coordinates and haptic cue definitions for haptic feedback when reading the .PDF file.

In an embodiment the haptic map data 28 is obtained by:
- synthesising, using speech signal synthesis 64a, at least one synthetic audio cue comprising a synthetic vocal representation of a corresponding visual cue 26 comprised in the input data;
- transforming, using haptic signal synthesis 64b, the at least one synthetic audio cue into the haptic cue definition 28b, wherein the haptic cue definition corresponds to the at least one visual cue 26; and
- generating a mapping 30 of the haptic cue definition 28b to the at least one visual cue 26 or map 28a, to thus generate the haptic map data 28.

**Figure 5** schematically illustrates an example of obtaining a haptic cue signal from visual cues.

For example, an index to the haptic map data 28, in this example a reference to the haptic field identifier h1, is associated with the free-text forming the visual cue 26. A text recognition and segmentation algorithm can be applied to partition text in the input data into appropriately located haptic fields. In an example, each word is a visual cue 26 related to an individual haptic field. In an example, each phoneme is a visual cue 26 related to an individual haptic field. In an example, each syllable is a visual cue 26 related to an individual haptic field. In an example, a visual cue 26 related to an individual haptic field comprises a predetermined number of words or letters.

In **Figure 5****,** a speech synthesiser 64a operated by the digital device 60, or another device or web service provided for pre-processing the input data, is configured to select the text associated with a single visual cue 26 in a first haptic field h1, in this case "Biology". The speech synthesiser generates a vocal signal, for example of human speech, based on the text of the visual cue 26. In examples, the speech synthesiser can generate the vocal signal in user-selected frequency ranges, such as that of a bass, baritone, alto, or soprano, dependent on user preference.

A speech synthesiser may also be referred to as a "text-to-speech algorithm" that enables a digital device to convert text into speech sounds imitative of the human voice, which relate to the digital text. An example of speech synthesis software suitable for embedded applications is provided by Nuance (TM), or as a web service by Amazon Web Services (TM), for example.

To obtain the haptic cue definition 28b, signal processing is performed on the output of the speech synthesiser generated by the visual cue 26 associated with first haptic field h1.

In an embodiment, the method comprises transforming the at least one synthetic audio cue into a corresponding haptic cue definition 28b further comprises extracting a fundamental frequency f1-f8 of the at least one audio cue, and designating the extracted fundamental frequency of the at least one audio cue as a haptic cue definition in the set of haptic cue definitions 28b corresponding to the at least one visual cue 26 from which the at least one audio cue was generated.

In an embodiment, the method comprises transforming the at least one audio cue into a haptic cue definition in the set of haptic cue definitions 28b further comprises band-limiting the at least one audio cue, and designating the band-limited at least one audio cue as a haptic cue in the set of haptic cue definitions 28b corresponding to the visual cue 26 from which the at least one audio cue was generated.

Although this specification focuses on the case of silent reading, with multisensory feedback via haptic means, an additional embodiment provides three forms of sensory feedback simultaneously namely: a student reads, receives audio feedback through a loudspeaker or headphone of the word that they are looking at on the display 24, and additionally also receives haptic feedback as discussed above.

A skilled person will appreciate that in this case, the digital device 60 is communicably coupled to an audio output means such as a loudspeaker or headphone, or wireless earbuds, for example. The output of the speech synthesiser 64a is already computed for generating the haptic signal definitions. Accordingly, in this embodiment the audio output of the speech synthesiser 64a is stored in an audio signal array, with a reference to a corresponding haptic field h1. When the location 29 of the gaze region 25 coincides with the haptic field h1, as well as the haptic cue signal 28c being output by the haptic output device 50, the h1 record of the audio signal array (not shown) interrogated, and the synthesized snippet of audio data contained therein is broadcast to the user via the audio output means simultaneously with the output of the haptic feedback generated by the haptic feedback generator 54 of the haptic output device 50.

In an embodiment, the method comprises outputting, via an audio output device, the at least one audio cue comprising the synthetic vocal representation of the corresponding at least one visual cue 26 simultaneously with the output of the corresponding at least one haptic cue signal 28c to at least one haptic output device 50.

In other words, a specific example of the use of the system discussed above is as follows. The user loads a document as input data onto a digital device 60. The document can be in digital form, with each word separated out. The document can be created by the user in the form of notes, or it could be a document found online such as PDF or Word format. The user initiates their reading of the document at their own pace. In an example, the digital device 60 is arranged so that the user's eyes are visible to the eye tracker 70. The eye tracker 70 that is communicably coupled to the digital device 60 extrapolates the reading location 29 on the document based on the gaze region of the user detected by the eye tracker 70. The system can also determine the reading speed and direction of the user, in order to anticipate further required haptic feedback. The eye tracking process is transparent to the user. Software hosted by the digital device 60, and converts each word in the document to a specific vibration pattern associated with synthesised human speech. The vibration pattern is stored in a set of haptic map data 28. The reading location 25 of the user is correlated to the respective vibration pattern in the set of haptic map data 28. The vibrational pattern that matches the user's reading location in the text document is transmitted to the user's feedback device.

Of course, the user can optionally adjust the amplitude of the vibrations using associated application-specific software. The vibrations felt by the user whilst reading from the display 24 therefore contribute to multisensory enhancement.

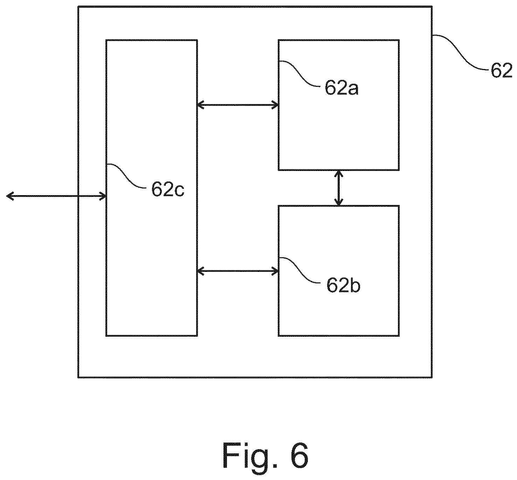

**Figure 6** schematically illustrates an example of an apparatus according to the second aspect.

According to the second aspect, an apparatus 62 for haptically augmenting the display of visual cues is provided. The apparatus 62 comprises a processor 62a, a memory 62b, and a communication interface 62c. The processor 62a is configured to obtain input data comprising at least one visual cue 26 to be displayed on a display 24.

The processor 62a is configured to obtain haptic map data 28 corresponding to the at least one visual cue 26 comprised in the input data. The haptic map data 28 comprises a map 28a characterising a display location of the at least one visual cue, a set of haptic cue definitions 28b, and a mapping 30 between the set of haptic cue definitions and the at least one visual cue 26 or map 28a. Each haptic cue definition enables the generation of a corresponding haptic cue signal 28c related to at least one spatial region of the display 26 when at least one of the visual cues 24 is visible on the display 24.

The processor 62a is configured to communicate the at least one visual cue 26 comprised in the input data, via the communication interface 62c, for display on the at least one spatial region of the display 24.

The processor is configured to receive, via the communication interface, a location 29 of a gaze region 25 of the user on the display 24 from an eye tracker 70.

The processor 62a is configured to generate at least one haptic cue signal 28c from the set of haptic cue definitions 28b based on a comparison of the location 29 of the gaze region 25 on the display 24 with the map of the haptic map data 28.

The processor 62a is configured to output the at least one haptic cue signal 28c to at least one haptic output device via the communication interface 62c.

According to an embodiment, the processor 62a is further configured to synthesise, using speech signal synthesis 64a, at least one synthetic audio cue comprising a synthetic vocal representation of a corresponding visual cue comprised in the input data, to transform, using haptic signal synthesis 64b, the at least one synthetic audio cue into the haptic cue definition 28b, wherein the haptic cue definition corresponds to the at least one visual cue 26, and to generate a mapping 30 of the haptic cue definition 28b to the at least one visual cue 26 or map 28a, to thus generate the haptic map data 28.

The apparatus 62 is, in examples, embodied in any computer or processing device capable of performing the signal processing such as speech signal synthesis and haptic signal synthesis (either by on-board processing, or by processing performed by a connected web service) within the real-time deadline required by the particular application. For example, the apparatus 62 can be embodied as a personal computer, a smart tablet, a smartwatch, a smart phone, a cloud server, or web accessible server.

Turning back to **Figure 2****,** this figure schematically illustrates an example of the system according to the third aspect.

According to a fourth aspect, a system 80 for assisted reading comprising an apparatus 62 according to the second aspect, or its embodiments, is provided. The system 80 comprises a display 24, an eye tracker 70 communicably coupled to the apparatus 62, and a haptic output device 50 communicably coupled to the apparatus 62. The eye tracker 70 is configured to perform eye tracking of a user of the display 24 to characterise a location 29 of a gaze region 25 of the user on the display 24, and to provide the location 29 to the apparatus 62.

The haptic output device 50 is configured to receive from the apparatus 62, at least one haptic cue signal 28c, and to induce a haptic sensation corresponding to the location 29 of the gaze region 25 using the haptic output device 50.

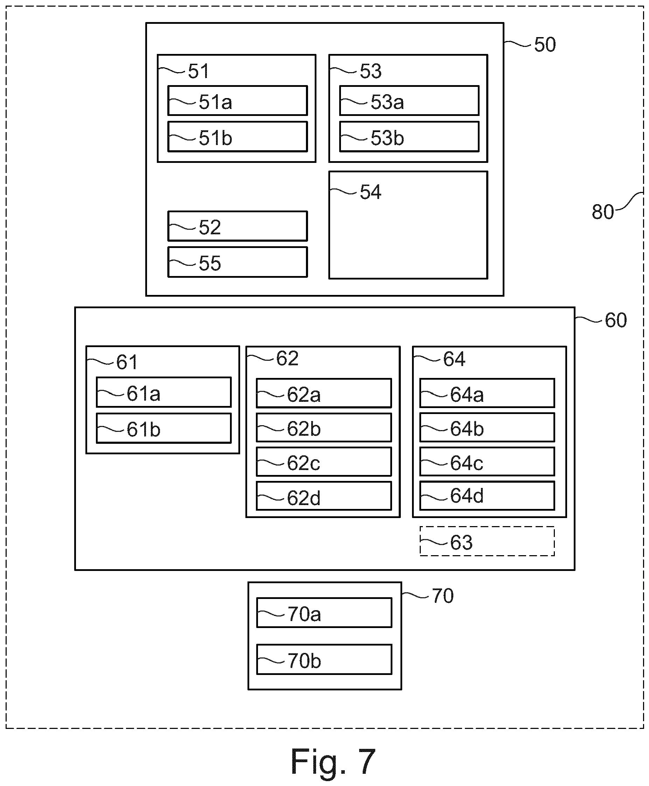

**Figure 7** schematically illustrates an example of the system 80 according to the third aspect, showing more detail of relevant modules.

The digital device 60 is configured to enable the user to perform a variety of tasks, such as reading a digital document (for example, in .PDF format). The digital device 60 can enable the user to enhance their understanding of digital text in a multitude of environments (for example, noisy environments.

The digital device 60 comprises a power supply 61 capable of providing. the required energy for the subsystems of the digital device 60 to function. For example, the power supply 61 comprises energy storage 61a, such as a battery, and a charger 61b. The charger 61b includes the required electronics for charging and maintaining the health of the energy storage 61a. The power supply 61 can alternatively comprise an AC-DC converter, for example.

The digital device 60 comprises the apparatus 62. For example, the processor 62a functions as a digital device computation system that includes hardware required for the digital device 60 to function. For example, the processor 62a is configured to execute the operating system device 62a and to coordinate the hardware of the digital device 60 such that the user requests (input) to the device are recognised and executed appropriately. The processor 62a comprises a central processing unit (CPU) and cache memory.

The digital device 60 further comprises memory 62b, such as RAM and/or ROM. Also encompassed in the definition of memory is long-term storage such as flash storage or a hard disk drive capable of storing the firmware, and software required for the digital device 60 to store, read, and process digital data.

The digital device 60 further comprises a display interface 62d. The display interface,62c encompasses the electronics for converting the output of the processor 62a to a video signal suitable for visual representation by a display 24. The display interface 62c is, in examples, configured to provide signals capable of driving one of a liquid crystal display (LCD), organic light-emitting diode display (OLED), or a light-emitting diode display (LED), LCD projector display as used with e-whiteboards.

The digital device 60 further comprises a communication interface 62c. The communication interface 62d is configured to establish the wireless connection between the digital device 60 and other devices (such as the haptic output device 50). The communication protocol operated by the communication interface 62d can be, for example, a Bluetooth (TM) or Wi-Fi (TM) interface, as but two examples.

The system 80 further comprises the eye tracker 70. The eye tracker 70 is responsible for determining the location 29 of the gaze region 25. The eye tracker 70 can be physically incorporated into the same enclosure of the digital device 60, or an enclosure that is separate to the digital device 60.

The eye tracker 70 may comprise a sensor subassembly 70a comprising, for example, lenses, light sensors, light-emitting devices, application-specific electronics, and embedded processors and/or FPGAs that are customised to perform an eye tracking operation. The sensor subassembly 70a can communicate the detected position of the eyes of user on a display 24 with application-specific software 64 hosted by the digital device 60. For example, the eye tracker sensor subassembly 70a can comprise an infrared light emitting diode, a CMOS sensor capable of identifying infrared light, and a lens subassembly capable of focusing the received infrared light.

The sensor subassembly 70a is communicably coupled to a software application 70b of the eye tracker 70. The software application 70b is, for example, embedded software that operates transparently to the user. The software application 70b is configured to gather information supplied by the sensors of the eye tracker 70 and, through data filtering and calculations, to output an estimated location 29 of a gaze region 25 of a user. The eye tracker 70 can further compute the speed and direction of the user's gaze with respect to the display 24 of the digital device 60.

For example, the location 25 of the gaze region 29 is the resulting location of the user's eyes normalised to the resolution of the display 24. This enables a pixel-level location estimation to be performed. As one example, in a 1920 by 1080 pixel-wide screen, if the user is looking at the centre group of 25 pixels, and eye location estimate of 5 by 5 pixels could be returned.

The digital device 60 is further configured to host an operating system 63, capable of managing the hardware, software resources, and to provide common services for software programs and application-specific algorithms. The operating system 63 is chosen from, but not limited to, Microsoft Windows (TM), Mac OS (TM), Android OS (TM), Linux OS (TM), or iPad OS (TM).

The digital device 60 hosts application specific software 64. In accordance with the functional description of the method according to the first aspect above, the application-specific software is configured to (i) accept input data comprising visual cues and to process the input data to generate a plurality of haptic cue definitions, and (ii) to receive feedback from an eye tracker 70 and to output the haptic cue signal using the haptic cue definitions based on the location of the user's gaze on the display 24.

The application-specific software 64 can comprise a speech synthesiser 64a, haptic signal synthesiser 64b, a correlator 64c, and a vibrational data memory 64d capable of storing the haptic map data 28 and associated mapping 30. The function of the application-specific software 64 has been discussed in detail above in relation to the first aspect, to which the reader is now referred.

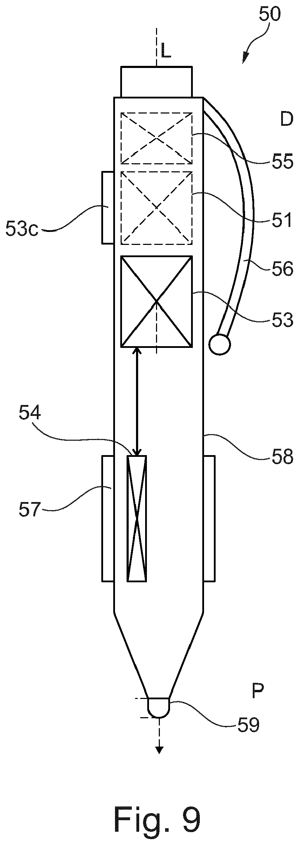

**Figure 9** also illustrates functional elements of a haptic output device 50. In an example, the haptic output device 50 has the form of a digital stylus capable of transferring vibrational patterns to the user's fingertips.

The device may comprise a device power supply 51 having a battery 51a and a charger 51b to provide energy to the electrical circuitry of the haptic output device 50.

The haptic output device 50 comprises a haptic feedback generator 54. The haptic feedback generator 54 is capable of receiving digital data from the haptic device controller 53 and converting it into vibrations or tactile sensations that can be felt by the user. In an embodiment, the haptic feedback generator 54 is located as close to a proximal end P of an elongate body portion 58 as possible (as illustrated in **Figure 9**), so that the vibrations are transferred to a user's fingers, in other words close to the nib 59 of a haptic output device 50 in the form of a pen.

The haptic feedback generator 54 may comprise a subsystem configured to convert analogue electronic signals or digital electronic signals into mechanical energy in the form of vibrations that can be felt by the user. In an example, the subsystem is capable of generating vibrations in the range of 0 to 500 Hz with a controllable amplitude, while being power efficient enough to be integrated within a portable consumer product.

Some examples of a haptic feedback generator 54 are: rotary motors with a weight off the centre of rotation, linear vibration motors, and piezo-electric vibration motors.

The haptic feedback generator 54 can comprise hardware or firmware for converting a haptic cue signal 28c discussed above into a signal that can drive the haptic feedback generator 54. The haptic cue signal 28c can be a digital or analogue representation of signal having a fundamental frequency in the range of 0 to 500 Hz, in an example. In another example, the haptic feedback generator 54 is configured to receive a haptic cue definition 28b (for example, a numerical expression of the fundamental frequency) and to convert the haptic cue definition 28b into a haptic cue signal 28c.

The haptic output device 50 may further comprises a wireless communications interface 55 enabling the haptic output device 50 to communicate with digital device 60. For example, the wireless communications interface 55 comprises Bluetooth (TM), Bluetooth Low Energy (TM), Wi-Fi (TM) (802.11a, b, g, n, ac, ad), Wireless USB, UMTS, LTE, or ZigBee (TM) interfaces, as implemented by associated chipsets. The haptic cue signal 28c and/or haptic cue definition 28b can be transmitted from the digital device 62 the haptic output device 50 via the wireless communications interface 55.

The haptic output device 50 further comprises a haptic device controller 53 comprising a processor 53a and a haptic device driver 53b. The haptic device controller 53 is configured to coordinate the hardware comprised in the haptic output device 50 so that it responds appropriately to commands or requests from the digital device 60. For example, the haptic device controller 53 is configured to manage or monitor the power supply 51, receive data from the wireless communications interface 55, and to control the haptic feedback generator 54 using the haptic device driver 53b.

The haptic output device 50 further comprises firmware and/or software 52 executed by the haptic device controller 53. The firmware and/or software 52 is, for example, configured to receive data from the digital device 60 received by the wireless communications interface 55 the firmware and/or software 52 is for example, configured to send appropriate signals, via the haptic device driver 53b, to the haptic feedback generator 54 as defined by the haptic cue signal 28c.

Further examples of the implementation of the haptic output device 50 and/or the digital device 60 are now discussed. The digital device 60 can be of the form of a smart phone, a laptop, a personal computer, a smart tablet.

In order to improve the user experience, the haptic output device 50 can be implemented as a software upgrade to a device that already comprises a haptic feedback generator 54. In an example, the haptic feedback generator 54 of user supplied equipment should have a haptic generator controllable in software of the user supplied equipment, with a variable frequency range between 0 and 500 Hz, for example.

Example embodiments of such existing devices are smart watches, fitness bands, and smart rings. In each case, the application software of the user supplied equipment would be upgraded to enable the user supplied equipment to process haptic cue signals received from a digital device 60.

In a further example, the haptic output device is a haptic glove, with at least one haptic feedback generator 54 located on at least one fingertip of the glove.

In a further example, the haptic output device 50 and the digital device 60 are integrated in the same enclosure. In this case, the haptic feedback generator 54 should be placed in a location that the user is most likely to hold the device from. For example, the haptic output device 50 and the digital device 60 can be integrated in a computer game control handset.

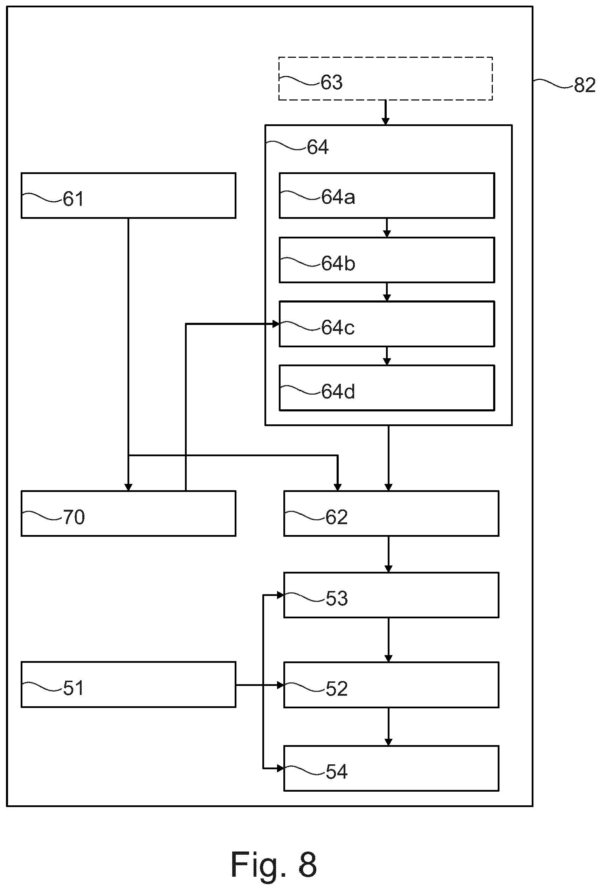

**Figure 8** schematically illustrates an overview of an algorithm 82 for haptically augmented display of visual cues. The elements of the algorithm 82 share like reference numerals discussed in the foregoing description.

**Figure 9** schematically illustrates an example of a haptic output device 50 according to the fourth aspect in the form of a writing instrument.

According to the fourth aspect, a haptic output device 50 comprises: a controller 53, a wireless communications interface, 55, and a haptic feedback generator 54.

The controller 53 is configured to obtain, via the wireless communications interface 55, location data defining a location 29 of a gaze region 25 of the user on a display 24 from an eye tracker 70.

The controller 53 is configured to obtain haptic map data 28, wherein the haptic map data 28 comprises a map 28a characterising a display location of the at least one visual cue, a set of haptic cue definitions 28b, and a mapping 30 between the set of haptic cue definitions and the at least one visual cue 26 or map 28a, wherein each haptic cue definition enables the generation of a corresponding haptic cue signal (8c related to at least one spatial region of the display 24 when at least one of the visual cues 24 is visible on the display.

The controller 53 is configured to generate at least one haptic cue signal 28c from the set of haptic cue definitions 28b based on a comparison of the location data with the map of the haptic map data 28.

The controller 53 is configured to actuate the haptic feedback generator 54 using the at least one haptic cue signal 28c such that, in use, a haptic cue is perceived by a user of the haptic output device 50.

According to an embodiment, the haptic output device 50 is comprised within a writing instrument, for example a ball-point pen, a felt-tip pen, a fountain pen, a crayon, an automatic pencil, and the like.

In the example of **Figure 9****,** the haptic output device 50 can have a circular, ovular, square, rectangular, pentagonal, hexagonal, or heptagonal cross-section along at least a portion.

The form-factor of the elongate body portion 58 can change along the longitudinal axis L of the haptic output device 50 to accommodate ergonomic variations or to enhance user comfort, for example (not illustrated).

In an example, the total length of the haptic output device 50 in the longitudinal direction L is between 50mm and 200mm, and specifically 140mm. In an example, when the writing instrument has a circular cross-section, the maximum diameter of the writing instrument is in the range of 6mm to 20mm, and specifically 9mm. The elongate body portion 58 of the haptic output device 50 can, for example, comprise polystyrene or polypropylene.

In the illustrated example, the external surface of the haptic output device 50 comprises, near to its distal end D, a pen clip 56 for facilitating attachment to a user's pocket, for example. The haptic output device 50 can comprise, near to the proximal end, a user grip 57 enabling secure grip of the device whilst still being capable of transmitting haptic sensations to a user. The user grip can be moulded to achieve an ergonomic match with a typical user profile, to enhance writing comfort.

The haptic device controller 53 can comprise a microcontroller or microprocessor suitable for low energy, real-time processing such as an ARM (TM) Cortex A510, although skilled person will be able to use other microprocessors and circuitry. The wireless communication interface 55 comprises a chipset capable of performing bidirectional data communication with the haptic device controller 53, and wireless communication with another node in a wireless communication network, or a digital device 60, for example.

The haptic device controller 53 may also comprise a haptic device power supply 51 for providing electrical power to the electronic circuitry of the writing instrument. In an example, the haptic device power supply 51 is an alkaline battery (such as a AAA or an AA battery), a lithium battery, a Li-ion battery, and the like. The battery can be embedded in the writing instrument, and either be disposable or rechargeable.

The wireless communications interface 55, may, for example, comprises Bluetooth (TM), Bluetooth Low Energy (TM), Wi-Fi (TM) (802.11a, b, g, n, ac, ad), Wireless USB, UMTS, LTE, or ZigBee (TM) interfaces, as implemented by associated chipsets. The haptic cue signal 28c and/or haptic cue definition 28b can be transmitted from the digital device 62 the haptic output device 50 via the wireless communications interface 55.

The haptic output device 50 comprises a haptic feedback generator 54 close to a proximal end P (tip) comprising a nib 59. In this case, the vibrations emitted by the haptic feedback generator 54 are transmitted through the elongate body portion 58 into the fingers and/or hand of the user.

According to a first example of the fourth aspect, the haptic map data 28 is obtained as a pre-generated data file. For example, the haptic map data 28 is computed by a remote device according to the method discussed in connection with **Figures** 2, 4, and 5, and described previously. A remote device wirelessly communicates the haptic map data 28 to the wireless communications interface 55 of the haptic output device 50. Location data, such as a coordinate of a location 25 of a gaze region 29 obtained from an eye tracker 70 in real-time whilst a user is observing a display 24, is transmitted to the haptic output device 50. In this context, real time means that the time delay between the location 29 of the gaze region 29 obtained from an eye tracker 70 moving to a new visual cue 26, and the reception of the location data at the haptic output device denoting such a motion, is less than 10ms, less than 100ms, less than 500ms, or less than 1 second.

According to a second example of the fourth aspect, the haptic map data 28 is generated by the haptic output device 50. In this case, the haptic output device 50 receives, via the wireless communications interface 55, input data comprising a data representation of a set of visual cues to be displayed on a display 24.

Input data can be encoded in a variety of formats. In an example, the input data is a Portable Document Format (.PDF) file. The visual cues 26 are comprised as text in the body of the .PDF file. A PDF parser is, for example, configured to identify a PDF "Page" object, corresponding to a page to be displayed on a display 24. In an example, the input data is an HTML page of a website accessed by an Internet browser.

In this example, the haptic map data 28 is computed by the controller 53 the haptic output device 50 according to the method discussed in connection with **Figures** 2, 4, and 5, and described previously. The haptic output device 50 then receives location data as described above, and outputs haptic cues associated with the location 25 of a gaze region 29 obtained from an eye tracker 70 in real-time.

According to a fifth aspect, a computer program element comprising machine readable instructions is provided which, when executed by a processor, causes the processor to perform the computer implemented method of the first aspect, or its embodiments.

According to a sixth aspect, a computer readable medium comprising the computer program element according to the fifth aspect is provided.

References throughout the preceding specification to "one embodiment", "an embodiment", "one example" or "an example", "one aspect" or "an aspect" means that a particular feature, structure, or characteristic described in connection with the embodiment or example is included in at least one embodiment of the present disclosure. Thus, appearances of the phrases "in one embodiment", "in an embodiment", "one example" or "an example", "one aspect" or "an aspect" in various places throughout this specification are not necessarily all referring to the same embodiment or example.

Furthermore, the particular features, structures, or characteristics can be combined in any suitable combinations and / or sub-combinations in one or more embodiments or examples.

### Embodiments

According to a seventh aspect, a computer implemented method for generating haptic map data is provided. The method comprises:
- obtaining input data comprising at least one visual cue 26;
- synthesising, using speech signal synthesis 64a, at least one synthetic audio cue comprising a synthetic vocal representation of a corresponding visual cue comprised in the input data;
- transforming, using haptic signal synthesis 64b, the at least one synthetic audio cue into the haptic cue definition 28b, wherein the haptic cue definition corresponds to the at least one visual cue 26; and
- generating a mapping 30 of the haptic cue definition 28b to the at least one visual cue 26 or map 28a, to thus generate the haptic map data 28.

According to an embodiment of the seventh aspect, wherein transforming the at least one synthetic audio cue into a corresponding haptic cue definition 28b further comprises:
- extracting a fundamental frequency f1-f8 of the at least one audio cue, and designating the extracted fundamental frequency of the at least one audio cue as a haptic cue definition in the set of haptic cue definitions 28b corresponding to the at least one visual cue 26 from which the at least one audio cue was generated.

According to an embodiment of the seventh aspect transforming the at least one audio cue into a haptic cue definition in the set of haptic cue definitions 28b further comprises:
- band-limiting the at least one audio cue, and designating the band-limited at least one audio cue as a haptic cue in the set of haptic cue definitions 28b corresponding to the visual cue (26) from which the at least one audio cue was generated.

According to eighth aspect, a computer program element is provided, comprising machine readable instructions which, when executed by a processor, causes the processor to perform the computer implemented method of the seventh aspect, or its embodiments.

According to a ninth aspect, a computer readable medium comprising the computer program element according to the eighth aspect is provided.

### REFERENCE NUMERALS

| | | | |
|---|---|---|---|
| P | Proximal end | 60 | Digital device |
| D | Distal end | 61 | Power supply |
| | | 61a | Energy storage |
| 10 | Computer implemented method | 61b | Charger |
| 12 | Obtaining input data | 62 | Apparatus |
| 14 | Obtaining haptic map data | 62a | Processor |
| 16 | Displaying at least one visual cue | 62b | Memory |
| 18 | Receiving a location of a gaze region | 62c | Communication interface |
| 20 | Generating at least one haptic cue | 62d | Display interface |
| | | 63 | Operating system |
| 22 | Outputting the haptic cue | 64 | Application specific software |
| 24 | Display | 64a | Speech synthesizer |
| 25 | Gaze region | 64b | Haptic signal synthesizer |
| 26 | Visual cue | 64c | Correlator |
| 27 | Eye | 64d | Vibrational data memory |
| 28 | Haptic map data | 70 | Eye tracker |
| 28a | ...map | 70a | Sensor subassembly of eye tracker |
| 28b | ...haptic cue definitions | 70b | Software application of eye tracker |
| 28c | Haptic cue signal | | |
| 29 | Location of gaze region | 80 | System |
| 30 | Mapping | 82 | Algorithm |
| 50 | Haptic output device | | |
| 51 | Haptic device power supply | | |
| 51a | Battery | | |
| 51b | Charger | | |
| 52 | Haptic device firmware | | |
| 53 | Haptic device controller | | |
| 53a | Processor | | |
| 53b | Haptic device driver | | |
| 53c | User interface | | |
| 54 | Haptic feedback generator | | |
| 55 | Wireless communications interface | | |
| 56 | Pen clip | | |
| 57 | Pen grip | | |
| 58 | Elongate body portion | | |
| 59 | Nib | | |

## Claims

1. A computer implemented method (10) for haptically augmented display of visual cues comprising:
- obtaining (12) input data comprising at least one visual cue (26) to be displayed on a display (24);
- obtaining (14) haptic map data (28) corresponding to the at least one visual cue (26), wherein the haptic map data (28) comprises a map (28a) characterising a display location of the at least one visual cue, a set of haptic cue definitions (28b), and a mapping (30) between the set of haptic cue definitions (28b) and the at least one visual cue (26) or map (28a), wherein each haptic cue definition (28b) enables the generation of a corresponding haptic cue signal (28c) related to at least one spatial region of the display (24) when at least one of the visual cues (26) is visible to a user on the display (24);
- displaying (16) the at least one visual cue (26) comprised in the input data on at least one spatial region of the display (24);
- receiving (18), from an eye tracker (70) a location (29) of a gaze region (25) of the user on the display (24);
- generating (20) at least one haptic cue signal (28c) from the set of haptic cue definitions (28b) based on a comparison of the location (29) of the gaze region (25) on the display (24) with the map of the haptic map data (28); and
- outputting (22) the at least one haptic cue signal (28c) to at least one haptic output device (50).

2. The computer implemented method (10) according to claim 1, wherein generating the at least one haptic cue signal (28c) further comprises:
- relating the location (29) of the gaze region (25) of the user on the display (24) to the at least one visual cue (26) comprised in the haptic map data (28) when the at least one visual cue (26) is displayed on at least one spatial region of the display (26);
- identifying an intersection between the location (29) of the gaze region (25) and the at least one visual cue (26) comprised in the haptic map data (28) defined in the haptic map data; and
- obtaining the haptic cue definition (f1) from the set of haptic cue definitions (28b) based on the mapping to the set of haptic cue definitions from the at least one spatial region of the display (26).

3. The computer implemented method (10) according to one of claims 1 or 2, further comprising:
- registering an orientation of the display (26) to an orientation of the eye tracker (70).

4. The computer implemented method (10) according to one of the preceding claims, wherein the at least one visual cue (26) is text.

5. The computer implemented method (10) according to one of the preceding claims, wherein the display (26) is one of a computer monitor, a tablet screen, a smartphone screen, a smartwatch screen, an e-book screen, or a game controller.

6. The computer implemented method (10) according to one of the preceding claims, wherein the haptic output device (50) is comprised in a writing instrument, a tablet computer, a smartphone, or a smartwatch.

7. The computer implemented method (10) according to one of the preceding claims, wherein the haptic map data (28) is obtained by:
- synthesising, using speech signal synthesis (64a), at least one synthetic audio cue comprising a synthetic vocal representation of a corresponding visual cue comprised in the input data;
- transforming, using haptic signal synthesis (64b), the at least one synthetic audio cue into the haptic cue definition (28b), wherein the haptic cue definition corresponds to the at least one visual cue (26); and
- generating a mapping (30) of the haptic cue definition (28b) to the at least one visual cue (26), to thus generate the haptic map data (28).

8. The computer implemented method (10) according to claim 7, wherein transforming the at least one synthetic audio cue into a corresponding haptic cue definition (28b) further comprises:
- extracting a fundamental frequency (f1-f8) of the at least one audio cue, and designating the extracted fundamental frequency of the at least one audio cue as a haptic cue definition in the set of haptic cue definitions (28b) corresponding to the at least one visual cue (26) from which the at least one audio cue was generated.

9. The computer implemented method (10) according to one of claims 1 to 7, wherein transforming the at least one audio cue into a haptic cue definition in the set of haptic cue definitions (28b) further comprises:
- band-limiting the at least one audio cue, and designating the band-limited at least one audio cue as a haptic cue in the set of haptic cue definitions (28b) corresponding to the visual cue (26) from which the at least one audio cue was generated.

10. An apparatus (62) for haptically augmented display of visual cues, comprising:
- a processor (62a);
- a memory (62b); and
- a communication interface (62c);
wherein the processor (62a) is configured to obtain input data comprising at least one visual cue (26) to be displayed on a display (24);
wherein the processor (62a) is configured to obtain haptic map data (28) corresponding to the at least one visual cue (26) comprised in the input data, wherein the haptic map data (28) comprises a map (28a) characterising a display location of the at least one visual cue, a set of haptic cue definitions (28b), and a mapping (30) between the set of haptic cue definitions and the at least one visual cue (26) or map (28a), wherein each haptic cue definition enables the generation of a corresponding haptic cue signal (28c) related to at least one spatial region of the display (24) when at least one of the visual cues (26) is visible on the display (24),
wherein the processor (62a) is configured to communicate the at least one visual cue (26) comprised in the input data, via the communication interface (62c), for display on the at least one spatial region of the display (24);
wherein the processor is configured to receive, via the communication interface, a location (29) of a gaze region (25) of the user on the display (24) from an eye tracker (70) configured to perform eye tracking of a user of the display (24),
wherein the processor (62a) is configured to generate at least one haptic cue signal (28c) from the set of haptic cue definitions (28b) based on a comparison of the location (29) of the gaze region (25) on the display (24) with the map of the haptic map data (28); and wherein the processor (62a) is configured to output the at least one haptic cue signal (28c) to at least one haptic output device via the communication interface (62c).

11. The apparatus (62) according to claim 10,
wherein the processor (62a) is further configured to:
- synthesise, using speech signal synthesis (64a), at least one synthetic audio cue comprising a synthetic vocal representation of a corresponding visual cue comprised in the input data;
- transform, using haptic signal synthesis (64b), the at least one synthetic audio cue into the haptic cue definition (28b), wherein the haptic cue definition corresponds to the at least one visual cue (26); and
- generate a mapping (30) of the haptic cue definition (28b) to the at least one visual cue (26), to thus generate the haptic map data (28).

12. A system (80) for assisted reading comprising:
- an apparatus (62) according to one of claims 10 or 11;
- a display (24);
- an eye tracker (70) communicably coupled to the apparatus (62); and
- a haptic output device (50) communicably coupled to the apparatus (62);
wherein the eye tracker (70) is configured to perform eye tracking of a user of the display (24) to characterise a location (29) of a gaze region (25) of the user on the display (24), and to provide the location (29) to the apparatus (62);
wherein the haptic output device (50) is configured to receive, from the apparatus (62), at least one haptic cue signal (28c), and to induce a haptic sensation corresponding to the location (29) of the gaze region (25) using the haptic output device (50).

13. A haptic output device (50) comprising:
- a controller (53);
- a wireless communications interface (55); and
- a haptic feedback generator (54);
wherein the controller (53) is configured to obtain, via the wireless communications interface (55), location data defining a location (29) of a gaze region (25) of the user on a display (24) from an eye tracker (70);
wherein the controller (53) is configured to obtain haptic map data (28), wherein the haptic map data (28) comprises a map (28a) characterising a display location of at least one visual cue (26) on a display, a set of haptic cue definitions (28b), and a mapping (30) between the set of haptic cue definitions and the at least one visual cue (26) or map (28a), wherein each haptic cue definition enables the generation of a corresponding haptic cue signal (28c) related to at least one spatial region of the display (24) when at least one of the visual cues (26) is visible on the display (24);
wherein the controller (53) is configured to generate at least one haptic cue signal (28c) from the set of haptic cue definitions (28b) based on a comparison of the location data with the map of the haptic map data (28); and
wherein the controller (53) is configured to actuate the haptic feedback generator (54) using the at least one haptic cue signal (28c) such that, in use, a haptic cue is perceived by a user of the haptic output device (50).

14. The haptic output device (50) according to claim 13, wherein the haptic output device (50) is comprised within a writing instrument.

15. A computer program element comprising machine readable instructions which, when executed by a processor, causes the processor to perform the computer implemented method of one of claims 1 to 9.
